# EUROPÄISCHE PATENTANMELDUNG

(11) **EP 0 844 222 A2**
(43) Veröffentlichungstag der Anmeldung: **27.05.1998**
(21) Anmeldenummer: 97890220.3
(22) Anmeldetag: 05.11.1997
(51) Int. Cl.: C05F 7/02

(54) **Verwendung von modifizierten Abfallprodukten der Zellstoffgewinnung als hochwertigen Torfersatz**

(30) Priorität: 13.11.1996 AT 1990/96
(71) Anmelder: F. JOH. KWIZDA GESELLSCHAFT M.B.H., 1160 WIEN (AT)
(72) Erfinder: Polheim, Diether, Dr., 1160 Wien (AT); Eichinger, Karl, Dipl.-Ing. Dr., 2371 Hinterbrühl (AT); Kwizda, Johann F. Dr., 1011 Wien (AT)
(74) Vertreter: Pawloy, Peter Michael

(57) **Zusammenfassung**

Beschrieben wird die Verwendung von modifizierten Abfallprodukten der Zellstoffgewinnung als hochwertigen Torfersatz, wobei die Rejekts aus der Zellstoffindustrie, gegebenenfalls nach Neutralisierung, beispielsweise mittels in der Zellstoffindustrie anfallender geeigneter Abwässer, gereinigt und als Ersatzmaterial für natürlichen Torf verwendet werden.

## Beschreibung

Die vorliegende Erfindung betrifft die Verwendung von modifizierten Abfallprodukten der Zellstoffgewinnung als hochwertigen Torfersatz sowie ein Verfahren zur Modifizierung derartiger Abfallprodukte.

Bei der Zellstoffherstellung fallen nach der Delignifizierung des Holzes Reststoffe an, welche Anteile enthalten, die für eine weitere Verwendung im Zellstoffgewinnungsverfahren nicht verwendet werden können. Diese Reststoffe, nach üblicher Terminologie Spuckstoff oder "Rejekt" genannt, werden im Produktionsprozeß abgetrennt und stellen einen minderwertigen Abfall dar.

Bei der weiteren Behandlung und Veredelung der für die Zellstoffgewinnung geeigneten Faseranteile, dem sogenannten "Gutstoff", müssen andererseits Stoffe verwendet werden, welche im Produktionsprozeß zu chemikalienbelasteten Abwässern führen. Diese Abwässer bzw. Ablaugen enthalten teilweise noch Oxidantien und stellen ein ernsthaftes wirtschaftliches Problem dar. Dieses kann derzeit, bei Erfüllung der geltenden Umweltschutzauflagen, nur mit hohem Kostenaufwand gelöst werden.

Die Verwendung von Torf ist im Pflanzenbau seit langer Zeit üblich und vielfach notwendig. Die Beschaffung von Torf aus Moorgebieten wird jedoch aus Umweltschutzgründen und sich regional erschöpfender Quellen zunehmend schwieriger.

Es stellt sich somit für die Torfindustrie die Frage nach Ersatzstoffen für Torf mit möglichst torfähnlichen Eigenschaften. Weiters müssen diese Ersatzstoffe pflanzenverträglich sein und die entsprechenden Umweltauflagen erfüllen.

Die DD 133 788 A betrifft ein Verfahren zur Verwertung von Lignin oder ligninhaltigem Material, also Rejects, aus Ablaugen der Zellstoffindustrie, wobei das aufzuschließende Material in wässriger Phase in Gegenwart einer Stickstoffkomponente mit einem Oxidationsmittel intensiv durchmischt und bei einem Druck von 150 at sowie einer Temperatur bis 240°C mit oder ohne Katalysator zu einem reaktiven Zwischenprodukt oxidiert wird. Dieses reaktive Zwischenprodukt kann dann beispielsweise als Bodenverbesserungsmittel eingesetzt werden.

Die DD 235 250 A1 betrifft eine Weiterentwicklung des obgenannten Verfahrens und beschreibt ein Verfahren, wobei Sulfitablauge, eine basische Komponente und ein Oxidationsgas in einem Kreislauf bei einer Temperatur zwischen 50 und 99°C intensiv turbulent unter Schaumbildung durchmischt werden und die sich nach der Schaumbildung absetzende Flüssigkeit in besagten Kreislauf zur erneuten Schaumbildung zurückgeführt wird. Eine mögliche Verwendung des gewonnenen Zwischenprodukts als Torfersatz wird nicht erwähnt.

Gemäß der DD 289 040 werden Ablaugen aus der Zellstoffherstellung mit einer basischen stickstoffhaltigen Komponente und Oxidationsgas versetzt und der dabei erzeugte Schaum direkt in ein Reaktionsgefäß mit höhenverstellbaren Einbauten geleitet, wodurch ein optimales Verhältnis von reaktivem Schaum zu flüssiger Reaktionsmischung mit hohem Partialdruck erreicht wird. Die so gewonnenen organischen Zwischenprodukte können zu Düngemittel und Koagulantien weiter verarbeitet werden.

Zusammenfassend ist zum Stand der Technik zu sagen, daß dort Rückstände der Holzhydrolyse entweder unter Druck und bei Temperaturen bis zu 240°C unter Zusatz von Ammoniak als basische Komponente und einem Oxidationsmittel während Reaktionszeiten von 1 bis 7 Stunden umgesetzt werden, oder diese Umsetzung drucklos bzw. bei Atmosphärendruck in einer Schaumphase durchgeführt wird.

Ziel dieser Verfahren ist es, einen möglichst hohen Stickstoffgehalt der Produkte vorzusehen, wobei Stickstoff in das Lignin-Makromolekül chemisch eingebaut werden soll.

Aufgabe der vorliegenden Erfindung ist nun, einerseits eine nutzbringende Verwendung von Rejekts sowie gegebenenfalls Abwässern der Zellstoffindustrie zu finden und andererseits ein im Pflanzenbau verwendbares Ersatzmaterial für natürlichen Torf zur Verfügung zu stellen.

Diese Aufgabe wird erfindungsgemäß dadurch gelöst, daß Rejekts aus der Zellstoffindustrie, gegebenenfalls nach Neutralisierung, beispielsweise mittels in der Zellstoffindustrie anfallender geeigneter Abwässer, gereinigt und als Ersatzmaterial für natürlichen Torf verwendet werden. Die Verwendung von Rejekt bietet sich insofern als Torfersatzprodukt an, da dessen physikalische Eigenschaften jenen des natürlichen Torfes sehr ähnlich sind. Gegen diese Verwendung sprach bisher, daß das bei der Zellstoffproduktion anfallende Rejekt extrem sauer ist, einen unangenehmen Geruch hat, das Pflanzenwachstum teilweise hemmt, und zur Schimmelbildung neigt. Überraschenderweise hat sich nun gezeigt, daß durch gutes Durchlüften, gefolgt von einem weiteren Reinigungsschritt, der unangenehme Geruch beseitigt und die Schimmelbildung verhindert werden konnte. Wesentlich erscheint hiebei auch, daß durch eine Reinigung, wie sie in den Beispielen beschrieben wird und den dabei verwendeten Reaktionsbedingungen keinesfalls Stickstoff in die Lignin-Makromoleküle eingebaut werden kann, sodaß das Reaktionsprodukt ein völlig anderes als das im Stand der Technik beschriebene ist.

Als besonders günstig hat sich erwiesen, wenn derart vorbehandelte Rejekts nach Kompostierung als Torfersatz verwendet wurden.

Als Substrat in den nachfolgenden Beispielen wurde Rejekt der Firma Hallein Papier Zellstofferzeugung verwendet. Dieses Ausgangsmaterial weist einen typischen unangenehmen Geruch auf, ist extrem sauer und hemmt das Pflanzenwachstum.

Weiters wurden Ablaugen der Firma Hallein Papier Zellstofferzeugung mit den Bezeichnungen CW2 (Abwasser eines Chemiwashers), LSE (Abwasser eines Langsiebeindickers) und F2 (Abwasser eines Waschfilters) verwendet.

Die Zusammensetzung dieser Ablaugen ist - soweit feststellbar - etwa wie folgt:

### CW2 und LSE:

Hoher gelöster SO₂⁻⁻ und SO₄⁻⁻-Gehalt, saurer pH, hohe CSB- und TOC-Belastung, 60-80 ppm Fe³⁺, dieses Abwasser ist eine Zusammensetzung aus bis zu 3000 teilweise unbekannten Verbindungen und enthält gelöste Ligninfragmente, Zucker sowie diverse anorganische Verbindungen.

### F2:

Hoher H₂O₂-Gehalt (0,4-0,8 %), pH etwa 9,3, etwa 20 ppm Fe³⁺, durchschnittliche CSB- und TOC-Belastung.

Rejekt wird in einem offenen Gefäß 7 Tage bei Raumtemperatur in einem gut belüfteten Raum stehen gelassen. Dadurch verflüchtigt sich der dem Rejekt anhaftende unangenehme Geruch fast vollständig und es bleibt ein deutlicher Holzgeruch über, der nicht unangenehm ist.

Bei weiterer Lagerung des so belüfteten Rejekts in einem dicht verschlossenen Gefäß bleibt der Geruch unverändert. Der unangenehme Geruch tritt nicht wieder auf.

Als Ausgangsmaterial für die nachfolgend angeführten Reinigungsschritte diente jeweils für 7 Tage belüftetes Rejekt.

Zur Verbesserung der Eigenschaften von Rejekt als Pflanzensubstrat wurden die folgen Verfahrensschritte separat durchgeführt und dabei für jedes Reinigungsverfahren eine Probe an behandeltem Rejekt erhalten.

Bei den Beispielen 3 - 8 wird jeweils mechanisch gerührt.

### Beispiel 1

### Wasserdampfdestillation:

285 g Rejekt werden in einen 2 l-4-Halskolben in 1 l Wasser vorgelegt und einer Wasserdampfdestillation unterzogen bis insgesamt 1 l Wasser abdestilliert war. Der Feststoff wird abgesaugt und bei Raumtemperatur an Luft getrocknet bis das ursprüngliche Gewicht bis auf 10 % erreicht war.

### Beispiel 2

### Soxhlet-Extraktion:

25 g Rejekt werden in einem Soxhlet-Extraktor 12 Stunden extrahiert. Der Rückstand wird abgesaugt und an Luft getrocknet bis das ursprüngliche Gewicht bis auf 10 % erreicht war.

### Beispiel 3

### Rühren bei Raumtemperatur in 1 %-iger wäßriger H₂O₂-Lösung:

30 g Rejekt werden mit 200 ml einer 1 % wäßrigen H₂O₂-Lösung 16 Stunden bei Raumtemperatur gerührt. Dann wird abgesaugt, der Rückstand mit Wasser bis zur Entfernung des H₂O₂ gewaschen, nochmals abgesaugt und an Luft getrocknet bis das ursprüngliche Gewicht bis auf 10 % erreicht war.

### Beispiel 4

### Rühren bei Raumtemperatur in CW2:

30 g Rejekt werden mit 200 ml CW2 16 Stunden bei Raumtemperatur gerührt. Dann wird abgesaugt, und der Rückstand an Luft getrocknet bis das ursprüngliche Gewicht bis auf 10 % erreicht war.

### Beispiel 5

### Rühren bei Raumtemperatur in 1 % H₂O₂ in CW2:

30 g Rejekt werden mit 200 ml einer 1 % wäßrigen H₂O₂-Lösung in CW2 16 Stunden bei Raumtemperatur gerührt. Dann wird abgesaugt, der Rückstand mit Wasser bis zur Entfernung des H₂O₂ gewaschen, nochmals abgesaugt und an Luft getrocknet bis das ursprüngliche Gewicht bis auf 10 % erreicht war.

### Beispiel 6

### Rühren bei Raumtemperatur in LSE:

30 g Rejekt werden mit 200 ml LSE Stunden bei Raumtemperatur gerührt. Dann wird abgesaugt, und der Rückstand an Luft getrocknet bis das ursprüngliche Gewicht bis auf 10 % erreicht war.

### Beispiel 7

### Rühren bei Raumtemperatur in F2

30 g Rejekt werden mit 200 ml F2 16 Stunden bei Raumtemperatur gerührt. Dann wird abgesaugt, und der Rückstand an Luft getrocknet bis das ursprüngliche Gewicht bis auf 10 % erreicht war.

### Beispiel 8

### Rühren unter Rückfluß in 1 %-iger wäßriger H₂O₂-Lösung:

30 g Rejekt werden mit 200 ml einer 1 % wäßrigen H₂O₂-Lösung 16 Stunden gekocht. Dann wird abgesaugt, der Rückstand mit Wasser bis zur Entfernung des H₂O₂ gewaschen, nochmals abgesaugt und an Luft getrocknet bis das ursprüngliche Gewicht bis auf 10 % erreicht war.

Für Beispiel 9 wurde nichtbelüftetes Rejekt verwendet. Der Wassergehalt in dieser Beispiel von Rejekt wurde durch Trocknung bei 80°C und 10 Torr bis zur Gewichtskonstanz bestimmt. Es wurde dabei ein Wassergehalt von 32 Gew.% gefunden.

### Beispiel 9

### Oxidation mittels H₂O₂ und FeS₄ (Fenton-Oxidation):

100 g feuchtes, unbehandeltes Reject wurden mit 500 ml H₂O₂ bei Raumtemperatur (ca. 25°C) gerührt. Dazu wurden 1 g FeSO₄ und 1 ml 32 % H₂O₂ zugefügt und bei dieser Temperatur 2 Stunden gerührt.

Das Rejekt wird dabei etwas dunkler und es erfolgt eine sehr schwach exotherme Reaktion. Die Reaktionstemperatur steigt auf 28°C. Dann wird das Reaktionsgemisch abgesaugt und mit H₂O bis zum negativen H₂O₂ -Nachweis (KJ-Stärke-Papier) gewaschen. Dafür werden ca. 500 ml H₂O benötigt.

Um das Waschen mit H₂O zu vermeiden kann das H₂O₂ auch durch Zugabe von üblichen Reduktionsmitteln entfernt werden.

Statt Absaugung ist die Entfernung des H₂O durch Druck vorteilhafter.

Die genauen Konzentrationen an H₂O₂ und FeSO₄ und Menge an H₂O und die Reaktionszeiten hängen von der Konzentration an geruchsbelastenden Verunreinigungen und der genauen Reaktionsführung ab. Die minimal nötigen Konzentrationen können daher nur durch Versuche in technisch realistischen Ansatzgrößen ermittelt werden, deren Durchführung im Bereich des Wissens eines Fachmanns liegt.

Statt Leitungswasser kann auch CW2 zur Suspension des Rejekt zur Oxidation verwendet werden

### Pflanzenverträglichkeitstest

Um das Rejekt als Pflanzensubstrat und somit als Ersatzstoff für Torf verwenden zu können, wird ein Pflanzenverträglichkeitstest unter Verwendung des wie in den Beispielen 1 - 9 behandelten Torfersatzes durchgeführt.

Als neutrales Vergleichsmaterial diente Watte.

In je einer Kristallisierschale (d = 9 cm, h = 5 cm) wird als Grundschicht 30 g Seramis® (poröses Tongranulat) eingebracht. Darauf werden je 5 g der zu prüfenden Torfersatze der Beispiele 1 - 9 in die Schalen eingefüllt und das Saatgut der ausgewählten Testpflanze (Gartenkresse Lepidum sativum L. von der Firma Austrosaat) gleichmäßig auf deren Oberfläche verteilt.

Anschließend wird jeweils mit 70 g Wasser benetzt und täglich auf diese Menge ergänzt. Die Behälter werden mit einer Lebensmittelfolie als Verdunstungsschutz abgedeckt und täglich 12 Stunden mit einer Pflanzensonne" (WERGA® 100 Watt) bestrahlt.

Die Ansätze werden 9 Tage bei 20°C stehengelassen.

Die Keimrate bezogen auf das Vergleichsmaterial beträgt auf allen Beispiele 100 %. Pflanzenfarbe: grün

Es kann kein Unterschied in der Keimfähigkeit und im Wachstum zwischen den Vergleichen und den verschiedenen behandelten Torfersatz der Beispiele festgestellt werden.

## Patentansprüche

1. Verwendung von modifizierten Abfallprodukten der Zellstoffgewinnung als hochwertigen Torfersatz, dadurch gekennzeichnet, daß Rejekts aus der Zellstoffindustrie, gegebenenfalls nach Neutralisierung, beispielsweise mittels in der Zellstoffindustrie anfallender geeigneter Abwässer, gereinigt und als Ersatzmaterial für natürlichen Torf verwendet werden.

2. Verwendung nach Anspruch 1, dadurch gekennzeichnet, daß die Rejekts durch Wasserdampfdestillation gereinigt wurden.

3. Verwendung nach Anspruch 1, dadurch gekennzeichnet, daß die Rejekts durch Extraktion gereinigt wurden.

4. Verwendung nach Anspruch 1, dadurch gekennzeichnet, daß die Rejekts durch Oxidation gereinigt wurden.

5. Verwendung nach einem der Ansprüche 1 bis 4, dadurch gekennzeichnet, daß die Rejekts durch Abwasser aus der Zellstoffindustrie neutralisiert wurden.

6. Verwendung nach einem der Ansprüche 1 bis 5, dadurch gekennzeichnet, daß die Rejekts zusätzlich kompostiert wurden.

7. Verfahren zur Modifizierung von Abfallprodukten der Zellstoffgewinnung, dadurch gekennzeichnet, daß Rejekts aus der Zellstoffindustrie mittels in der Zellstoffindustrie anfallender geeigneter Abwässer neutralisiert und anschließend gereinigt werden.

8. Verfahren nach Anspruch 7, dadurch gekennzeichnet, daß die Rejekts durch Wasserdampfdestillation gereinigt wurden.

9. Verfahren nach Anspruch 7, dadurch gekennzeichnet, daß die Rejekts durch Extraktion gereinigt wurden.

10. Verfahren nach Anspruch 7, dadurch gekennzeichnet, daß die Rejekts durch Oxidation gereinigt wurden.
